# FASCICULE DE BREVET EUROPEEN

(11) **EP 2 178 754 B1**
(45) Date de publication et mention de la délivrance du brevet: **23.03.2011**
(21) Numéro de dépôt: 08837253.7
(22) Date de dépôt: 23.07.2008
(51) Int. Cl.: B64D 29/00, B64D 33/04, F01D 21/14

(54) **NACELLE EQUIPEE D'AU MOINS UNE TRAPPE DE SURPRESSION**
TRIEBWERKSGONDEL MIT MINDESTENS EINER ÜBERDRUCKKLAPPE
NACELLE COMPRISING AT LEAST ONE OVERPRESSURE VALVE

(30) Priorité: 20.08.2007 FR 0705936
(43) Date de publication de la demande: 28.04.2010
(73) Titulaire: Aircelle, 76700 Gonfreville L'Orcher (FR)
(72) Inventeur: LORE, Xavier Raymond Yves, F-76210 Beuzeville la Grenier (FR); SOULIER, Pascal-Marie Paul Marcel, F-76600 Le Havre (FR); DE SORBAY, Aurélie, F-76600 Le Havre (FR); LE DOCTE, Thierry Jacques Albert, F-76600 Le Havre (FR)
(74) Mandataire: Chevalier, Renaud Philippe
(86) Numéro de dépôt international: PCT/FR2008/001091
(87) Numéro de publication internationale: WO 2009/047399

(56) Documents cités:
- FR-A- 2 406 729
- US-A- 4 825 644

## Description

L'invention se rapporte à une nacelle de moteur à réaction pour un avion.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), comportant un panneau interne entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Certains équipements du turboréacteur conduisent des fluides fortement pressurisés. En cas de rupture intempestive des ces équipements, le panneau interne est soumis à une forte surpression qui peut conduire jusqu'à la destruction d'une partie dudit panneau et/ou du matériel logé dans cet environnement. Pour éviter cette destruction, il est communément admis d'installer une ou plusieurs trappes de surpression en partie arrière du panneau interne de la structure externe, à la sortie du canal annulaire, le débit de gaz constitutif de la surpression étant alors théoriquement évacué directement vers l'extérieur de la nacelle.

Néanmoins, le débit de gaz généré par l'explosion produite dans le compartiment du turboréacteur ne peut être expulsé qu'après avoir parcouru tout le trajet jusqu'à la trappe de surpression la plus proche. Or, il a été constaté en pratique que cet éloignement avait pour effet de limiter grandement l'intérêt de l'intégration de telles trappes de surpression, dans la mesure où la structure et/ou les équipements ont pu souffrir avant que la surpression ne soit évacuée. Dans certains cas, il a même été constaté que ces trappes de surpression ne jouaient aucun rôle.

Du document US 4,825,644, qui est considéré l'état de la technique 6 plus proche, il est connu de ménager des moyens d'échappement dans le panneau interne, ces moyens d'échappement comprenant au moins une trappe de surpression équipée de moyens d'écartement permettant de garantir un débit, minimal d'évacuation vers l'extérieur en cas de surpression intempestive, lesdits moyens d'écartement étant réalisés à l'aide d'au moins une béquille équipée de moyens de blocage conçus pour bloquer ladite béquille dans sa position d'écartement en cas de surpression nécessitant l'ouverture de la trappe de surpression. De ce fait, la surpression intempestive se produisant dans le compartiment du turboréacteur est immédiatement évacuée à l'intérieur du canal annulaire par le biais des moyens d'échappement, et ne peut par conséquent provoquer la destruction du panneau interne et/ou du matériel environnant.

La présente invention a pour objet de proposer une solution alternative, et consiste pour cela en une nacelle pour turboréacteur, du type comportant une section arrière constitutive d'une structure externe qui définit, avec une structure interne concentrique comportant un panneau interne destiné à entourer une partie aval du turboréacteur, un canal annulaire d'écoulement d'un flux dit secondaire, ladite nacelle comportant des moyens d'échappement ménagés dans le panneau interne et comprenant au moins une trappe de surpression équipée de moyens d'écartement permettant de garantir un débit minimal d'évacuation vers l'extérieur en cas de surpression intempestive, lesdits moyens d'écartement étant réalisés à l'aide d'au moins une béquille équipée de moyens de blocage conçus pour bloquer ladite béquille dans sa position d'écartement en cas de surpression nécessitant l'ouverture de la trappe de surpression, caractérisée en ce que la béquille comprend une enveloppe creuse dans laquelle peut coulisser une tige, ladite enveloppe présentant une extrémité fixée dans la trappe de surpression et ladite tige présentant une extrémité fixée dans le panneau interne, en ce que l'enveloppe présente un épaulement externe en forme de U, et en ce que les moyens de blocage sont réalisés à l'aide d'un insert en forme de U glissé dans l'épaulement externe et maintenu en position grâce à au moins un doigt de retenue logé dans l'enveloppe et reliant les deux branches libres dudit insert.

Avantageusement, des moyens de renvoi élastiques sont prévus entre l'enveloppe et l'insert de manière à écarter ledit insert de l'épaulement externe lorsque la tige a coulissé dans l'enveloppe, forçant de ce fait le doigt de retenue à venir se positionner sur la trajectoire de retour de ladite tige.

Préférentiellement, les moyens d'échappement sont positionnés à l'avant du panneau interne.

Il doit être bien compris qu'une autre solution pour pallier le risque potentiel de re-fermeture peut également consister dans l'intégration de moyens permettant de freiner le mouvement de re-fermeture de la trappe de surpression, de sorte que cette dernière puisse trouver son point d'équilibre.

Ainsi, dans une nacelle selon l'invention, la localisation de la ou des trappe(s) de surpression peut être choisie au plus près des équipements du turboréacteur susceptibles de créer la plus forte surpression, de sorte que cette ou ces trappe(s) de surpression soient capables d'évacuer cette surpression sans solliciter la raideur du panneau interne de la structure interne.

En effet, l'originalité de l'invention est de profiter de la surpression locale très importante à proximité de l'endroit de l'éclatement pour favoriser l'ouverture immédiate des moyens d'échappement, ce qui pemet en définitive une expulsion quasi-instantanée des gaz générés par l'explosion. Le risque d'endommagement du panneau interne et/ou du matériel environnant est par conséquent considérablement réduit.

Les avantages immédiats d'une telle installation sont un gain en masse et coût puisque, le panneau interne de la structure interne n'étant plus sollicité par d'éventuelles surpressions intempestives, il n'est plus nécessaire de le dimensionner afin qu'il puisse résister à de telles sollicitations. De plus, les avionneurs ont plus de liberté quant au choix de la localisation de la ou des trappe(s) de surpression le long du canal annulaire.

Etant donné la position de ces moyens d'échappement, une nacelle selon l'invention comprend de préférence des moyens de détection conçus de manière à rendre visibles depuis l'extérieur l'actionnement des moyens d'échappement.

Avantageusement, les moyens de détection comprennent un système de commande dont le déclenchement est conditionné par l'activation des moyens d'échappement.

Avantageusement encore, le système de commande est relié à au moins un organe mécanique de visualisation externe par l'intermédiaire de moyens de transmission.

Préférentiellement, le système de commande comprend une gâchette précontrainte, reliée aux moyens de transmission, dont la libération est conditionnée par la mise en action des moyens d'échappement.

La présente invention se rapporte également à un aéronef comprenant au moins une nacelle selon l'invention.

La mise en oeuvre de l'invention sera mieux comprise à l'aide de la description détaillée qui est exposée ci-dessous en regard du dessin annexé dans lequel :
La figure 1 est une vue schématique en coupe longitudinale d'une nacelle selon l'invention à l'état de fermeture ;
Les figures 2 et 3 sont des vues schématiques partielles en perspective du panneau interne d'une nacelle lorsqu'une trappe de surpression est déployée ;
La figure 4 est une vue en perspective de la trappe de surpression selon l'invention ;
La figure 5 est une vue partielle en coupe longitudinale de la béquille rétractée de la trappe de suppression représentée à la figure 4 ;
La figure 6 est une vue en coupe transversale selon la ligne VI-VI de la figure 4 ;
La figure 7 est une vue partielle en coupe longitudinale de la béquille déployée de la trappe de suppression représentée à la figure 4 ;
La figure 8 est une vue en coupe transversale selon la ligne VIII-VIII de la figure 7 ;
La figure 9 est une vue schématique partielle de la nacelle représentée à la figure 2, équipée des moyens de détection.

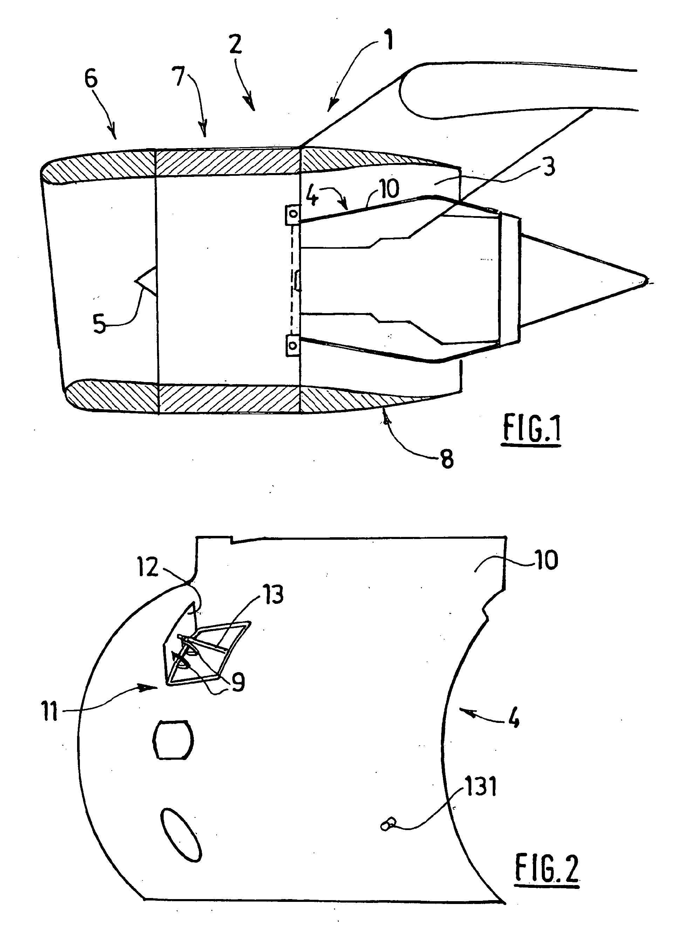

Une nacelle d'un aéronef 1 selon l'invention, telle que représentée à la figure 1, comprend de manière connue en soi une structure externe 2, dite OFS, qui définit un canal annulaire 3 d'écoulement avec une structure interne 4 concentrique, dite IFS, entourant la structure du turboréacteur (non représenté) en arrière d'une soufflante 5.

Plus précisément, cette structure externe 2 se décompose en une section avant 6 d'entrée d'air, une section médiane 7 destinée à entourer la soufflante 5, et une section arrière 8 formée généralement d'au moins deux demi-coquilles.

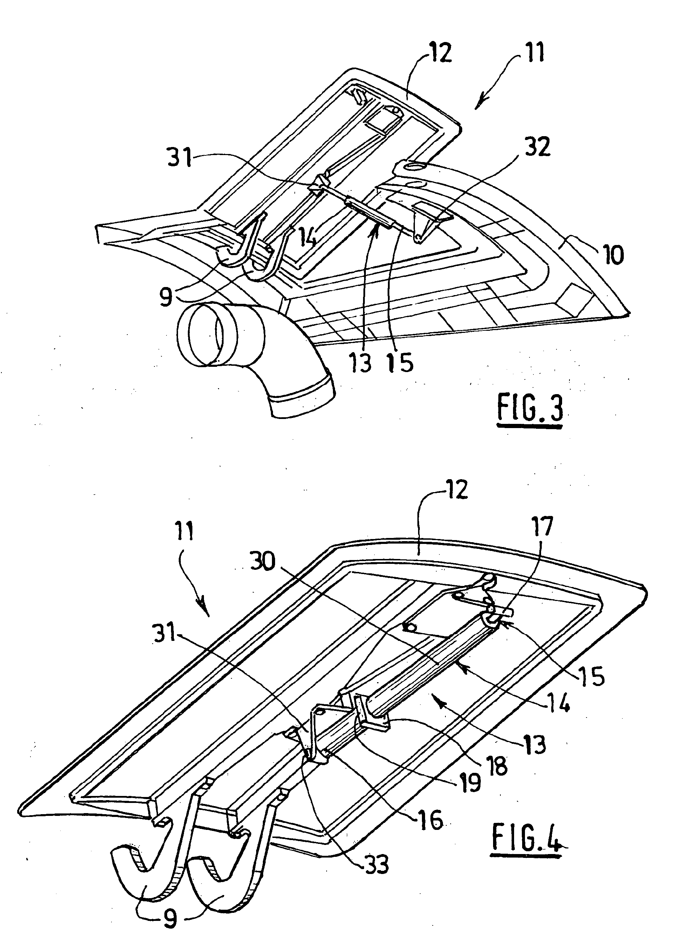

La structure interne 4 comporte un panneau interne 10 qui entoure une partie aval du turboréacteur. Comme représenté aux figures 2 et 3, des moyens d'échappements 11 sont ménagés dans ce panneau interne 10 afin que toute surpression intempestive survenant dans le compartiment du turboréacteur soit évacuée dans le canal annulaire 3.

Ces moyens d'échappement 11 sont préférentiellement positionnés à l'avant du panneau interne 10, de manière à être situé au plus près des zones sensibles dans lesquelles des surpressions peuvent intervenir du fait d'une explosion dans le compartiment du turboréacteur. Ces moyens d'échappement 11 comprennent au moins une trappe de surpression 12 équipée d'une béquille 13. La trappe de surpression 12 est rattachée au panneau interne 10, et est montée pivotante autour de ce dernier par l'intermédiaire d'un jeu de charnières 9.

Une nacelle selon l'invention est représentée plus spécifiquement aux figures 4 à 8.

La béquille 13 de la trappe de surpression 12 comprend une enveloppe 14 creuse cylindrique dans laquelle peut coulisser une tige 15. Cette enveloppe 14 présente une extrémité 16 montée pivotante autour d'un axe 33 dans une platine de fixation 31 rattachée à la trappe de surpression 12, et la tige 15 prolongeant l'enveloppe 14 présente une extrémité 17 montée pivotante dans un plot de fixation 32 rattaché au panneau interne 10 de la structure interne 4.

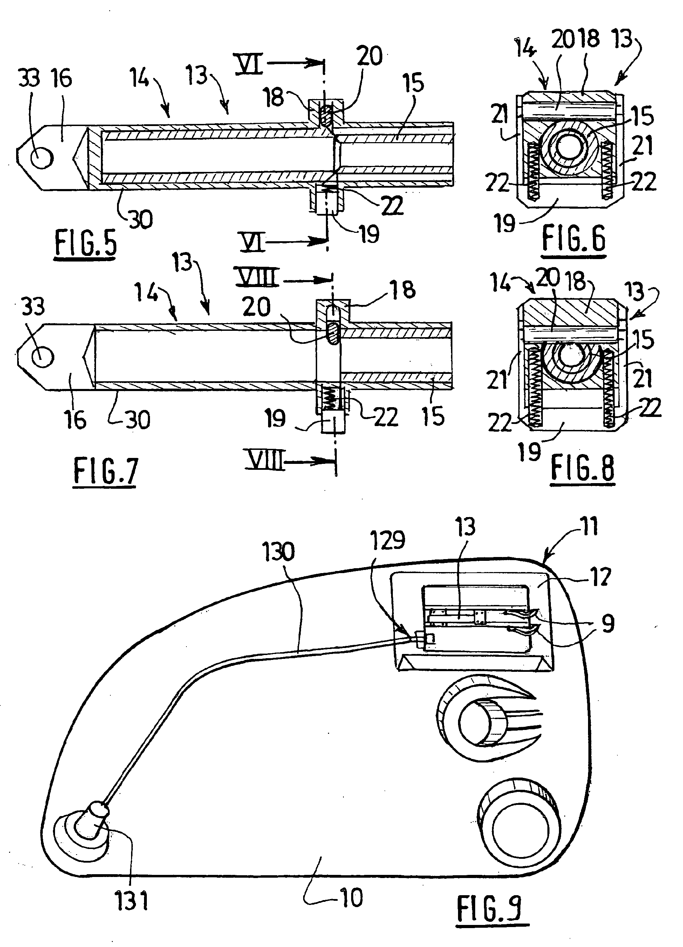

Plus précisément, et comme représenté aux figures 5 à 8, l'enveloppe 14 comporte une surface latérale 30 présentant un épaulement externe 18 en forme de U, et un insert 19 également en forme de U et glissé dans ledit épaulement externe 18, et maintenu en position grâce à un doigt de retenue 20 logé dans l'enveloppe 14 et reliant les deux branches 21 libres présentées par l'insert 19. De plus, des moyens de renvois élastiques réalisés sous la forme de deux ressorts de compression 22 disposés transversalement à la tige 15, et de part et d'autre de cette dernière, sont prévus entre l'enveloppe 14 et l'insert 19.

Ce faisant, lorsque la surpression survenue dans le compartiment du turboréacteur exerce des contraintes suffisantes sur la trappe de surpression 12 pour forcer cette dernière à s'ouvrir vers l'extérieur de manière à placer le compartiment du turboréacteur en libre communication avec le canal annulaire 3, la tige 15 est amenée à coulisser dans l'enveloppe 14 comme représentée aux figures 7 et 8, de telle manière que la tige 15 n'est plus disposée entre le doigt de retenue 20 et l'insert 19, ce qui a pour conséquence de permettre aux ressorts de compression 22 de se détendre et par là même de forcer ledit insert 19 à s'écarter de l'épaulement externe 18, ce qui a finalement pour effet de positionner le doigt de retenue 20 sur la trajectoire de la tige 15 en cas de mouvement arrière de celle-ci.

Par conséquent, ces moyens de blocage permettent de bloquer la béquille 13 dans sa position d'écartement qui a été conçue de manière à garantir un débit minimal d'évacuation vers l'extérieur en cas de surpression intempestive.

Cette béquille 13 pourra, lors des opérations de maintenance au sol, recouvrer sa position rétractée à la suite d'une opération manuelle au cours de laquelle l'opérateur, tout d'abord, actionnera l'insert 19 pour qu'il coulisse dans l'épaulement externe 18 de l'enveloppe 14, ce qui aura pour effet de translater le doigt de retenue 20 vers l'extérieur et libèrera le passage de retour en arrière pour la tige 15. Par gravité, la trappe de surpression 12 fera alors coulisser la tige 15 dans l'enveloppe 14 jusqu'au contact de la trappe de surpression 12 sur le panneau interne 10. La trappe de surpression 12 se retrouvera alors en position de fermeture, et donc dans l'alignement du panneau interne 10 de la structure interne 4.

Par ailleurs, des moyens de détection 129 sont avantageusement prévus pour permettre à ou aux opérateurs de vérifier instantanément depuis l'extérieur si les moyens d'échappement 11 ont été actionnés ou non en vol.

Pour cela, ces moyens de détection 129 comprennent un système de commande dont le déclenchement est conditionné par l'activation des moyens d'échappement 11, comme représenté schématiquement à la figure 9.

Ce système de commande comprendra avantageusement une came dont le pivotement sera commandé par l'ouverture de la trappe de surpression 12. Cette came sera de préférence reliée à une gâchette pré-contrainte, reliée à des moyens de transmission 130 rattachés à au moins un organe mécanique 131 de visualisation externe.

Plus précisément, le pivotement de la came provoquera la libération de la gâchette pré-contrainte, qui exercera alors en se détendant une traction sur les moyens de transmission avantageusement réalisés sous la forme d'un câble 130, cette traction provoquant le déploiement de l'organe mécanique réalisé de préférence sous la forme d'un dispositif 131 de type "pop-out", comme représenté en position déployée à la figure 2.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle pour turboréacteur, du type comportant une section arrière (8) constitutive d'une structure externe (2) qui définit, avec une structure interne (4) concentrique comportant un panneau interne (10) destiné à entourer une partie aval du turboréacteur, un canal annulaire (3) d'écoulement d'un flux dit secondaire, ladite nacelle comportant des moyens d'échappement (11) ménagés dans le panneau interne et comprenant au moins une trappe de surpression (12) équipée de moyens d'écartement (13) permettant de garantir un débit minimal d'évacuation vers l'extérieur en cas de surpression intempestive, lesdits moyens d'écartement étant réalisés à l'aide d'au moins une béquille (13) équipée de moyens de blocage conçus pour bloquer ladite béquille dans sa position d'écartement en cas de surpression nécessitant l'ouverture de la trappe de surpression, **caractérisée en ce que** la béquille comprend une enveloppe (14) creuse dans laquelle peut coulisser une tige (15), ladite enveloppe présentant une extrémité (16) fixée dans la trappe de surpression (12) et ladite tige présentant une extrémité (17) fixée dans le panneau interne (10), **en ce que** l'enveloppe (14) présente un épaulement externe (18) en forme de U, et **en ce que** les moyens de blocage sont réalisés à l'aide d'un insert (19) en forme de U glissé dans l'épaulement externe et maintenu en position grâce à au moins un doigt de retenue (20) logé dans l'enveloppe et reliant les deux branches (21) libres dudit insert.

2. Nacelle selon la revendication 1, **caractérisée en ce que** des moyens de renvoi élastiques (22) sont prévus entre l'enveloppe (14) et l'insert (19) de manière à écarter ledit insert de l'épaulement externe (18) lorsque la tige (15) a coulissé dans l'enveloppe, forçant de ce fait le doigt de retenue (20) à venir se positionner sur la trajectoire de retour de ladite tige.

3. Nacelle selon l'une quelconque des revendications 1 ou 2, **caractérisée en ce que** les moyens d'échappement sont positionnés à l'avant du panneau interne.

4. Nacelle selon l'une quelconque des revendications 1 à 3, **caractérisée en ce qu'**elle comprend des moyens de détection (129) conçus de manière à rendre visibles depuis l'extérieur l'actionnement des moyens d'échappement (11).

5. Nacelle selon la revendication 4, **caractérisée en ce que** les moyens de détection (129) comprennent un système de commande dont le déclenchement est conditionné par l'activation des moyens d'échappement (11).

6. Nacelle selon la revendication 5, **caractérisée en ce que** le système de commande est relié à au moins un organe mécanique (131) de visualisation externe par l'intermédiaire de moyens de transmission (130).

7. Nacelle selon la revendication 6, **caractérisée en ce que** le système de commande comprend une gâchette précontrainte, reliée aux moyens de transmission (130), dont la libération est conditionnée par la mise en action des moyens d'échappement (11).

8. Aéronef (1), **caractérisé en ce qu'**il comprend au moins une nacelle selon l'une quelconque des revendications 1 à 7.

## Claims

1. A nacelle for a jet engine, of the type comprising a rear section (8) forming an outer structure (2) which, together with a concentric inner structure (4) comprising an inner panel (10) intended to surround a downstream portion of the jet engine, defines an annular flow duct (3) for a so-called secondary stream, said nacelle comprising exhaust means (11) formed in the inner panel and comprising at least one excess pressure flap (12) equipped with spacing means (13) for guaranteeing a minimum discharge flow rate to the outside in the event of an untimely excess pressure, said spacing means being produced with the aid of at least one strut (13) equipped with locking means designed to lock said strut in its spacing position in the event of excess pressure requiring the opening of the excess pressure flap, **characterized in that** the strut comprises a hollow casing (14) in which a rod (15) can slide, said casing having an end (16) fixed in the excess pressure flap (12) and said rod having an end (17) fixed in the inner panel (10), **in that** the casing (14) has a U-shaped outer shoulder (18), and **in that** the locking means are produced with the aid of a U-shaped insert (19) which is slid into the outer shoulder and held in position by at least one retention finger (20) housed in the casing and connecting the two free arms (21) of said insert.

2. The nacelle as claimed in claim 1, **characterized in that** elastic return means (22) are provided between the casing (14) and the insert (19) in such a way as to move said insert away from the outer shoulder (18) when the rod (15) has slid in the casing, thereby forcing the retention finger (20) to position itself on the return path of said rod.

3. The nacelle as claimed in either one of claims 1 and 2, **characterized in that** the exhaust means are positioned at the front of the inner panel.

4. The nacelle as claimed in any one of claims 1 to 3, **characterized in that** it comprises detection means (129) designed so as to make the actuation of the exhaust means (11) visible from the outside.

5. The nacelle as claimed in claim 4, **characterized in that** the detection means (129) comprise a control system whose activation is conditioned by the activation of the exhaust means (11).

6. The nacelle as claimed in claim 5, **characterized in that** the control system is connected to at least one external mechanical display member (131) via transmission means (130).

7. The nacelle as claimed in claim 6, **characterized in that** the control system comprises a prestressed trigger connected to the transmission means (130), the release of which is conditioned by the actuation of the exhaust means (11) .

8. An aircraft (1), **characterized in that** it comprises at least one nacelle as claimed in any one of claims 1 to 7.

## Patentansprüche

1. Rumpf für Turbotriebwerk der Bauart, die einen hinteren Abschnitt (8) umfasst, der aus einer äußeren Struktur (2) besteht, die mit einer konzentrischen inneren Struktur (4), die eine innere Wand (10) aufweist, die dazu bestimmt ist, einen hinteren Abschnitt des Turbotriebwerks zu umschließen, einen ringförmigen Strömungskanal (3) eines als sekundär bezeichneten Stroms definiert, wobei der Rumpf Ausströmmittel (11) umfasst, die in die innere Wand eingearbeitet sind und mindestens eine Überdruckklappe (12) aufweisen, die mit Abspreizmitteln (13) ausgestattet sind, die es erlauben, bei Überdruck zur Unzeit eine Mindest-Auslassmenge nach außen zu gewährleisten, wobei die Abspreizmittel mit Hilfe mindestens einer Stütze (13) umgesetzt sind, die mit Blockiermitteln ausgestattet ist, die ausgebildet sind, um die Stütze bei Überdruck, der das Öffnen der Überdruckklappe notwendig macht, in ihrer Abspreizstellung zu blockieren, **dadurch gekennzeichnet, dass** die Stütze eine hohle Ummantelung (14) umfasst, in der eine Stange (15) gleiten kann, wobei die Ummantelung ein Ende (16) aufweist, das in der Überdruckklappe (12) befestigt ist und die Stange ein Ende (17) aufweist, das in der inneren Wand (10) befestigt ist, dass die Ummantelung (14) einen äußeren Absatz (18) in U-Form aufweist, und dass die Blockiermittel mit Hilfe eines Einsatzes (19) in U-Form umgesetzt sind, der in den äußeren Absatz eingeführt ist und mit mindestens einem Rückhaltefinger (20) in Stellung gehalten wird, der in der Ummantelung untergebracht ist und die zwei freien Arme (21) des Einsatzes verbindet.

2. Rumpf nach Anspruch 1, **dadurch gekennzeichnet, dass** elastische Umkehrmittel (22) zwischen der Ummantelung (14) und dem Einsatz (19) derart vorgesehen sind, dass der Einsatz von dem äußeren Absatz (18) abgespreizt wird, wenn die Stange (15) in der Ummantelung geglitten ist, wodurch der Rückhaltefinger (20) gezwungen wurde, sich auf dem Rückweg der Stange zu positionieren.

3. Rumpf nach einem der Ansprüche 1 oder 2, **dadurch gekennzeichnet, dass** die Ausströmmittel im vorderen Abschnitt der inneren Wand positioniert sind.

4. Rumpf nach einem der Ansprüche 1 bis 3, **dadurch gekennzeichnet, dass** er Detektionsmittel (129) umfasst, die derart ausgebildet sind, dass die Betätigung der Ausströmmittel (11) von außen sichtbar ist.

5. Rumpf nach Anspruch 4, **dadurch gekennzeichnet, dass** die Detektionsmittel (129) ein Steuerungssystem umfassen, dessen Auslösung von der Aktivierung der Ausströmmittel (11) abhängt.

6. Rumpf nach Anspruch 5, **dadurch gekennzeichnet, dass** das Steuerungssystem über Übertragungsmittel (130) mit mindestens einem mechanischen Organ (131) der externen Visualisierung verbunden ist.

7. Rumpf nach Anspruch 6, **dadurch gekennzeichnet, dass** das Steuerungssystem eine vorgespannte Zuhaltung umfasst, die mit den Übertragungsmitteln (130) verbunden ist, deren Freigabe von der Betätigung der Ausströmmittel (11) abhängt.

8. Luftfahrzeug (1), **dadurch gekennzeichnet, dass** es mindestens einen Triebwerksrumpf nach einem der Ansprüche 1 bis 7 umfasst.
